# EUROPEAN PATENT SPECIFICATION

(11) **EP 1 292 191 B1**
(45) Date of publication and mention of the grant of the patent: **02.03.2005**
(21) Application number: 01965026.6
(22) Date of filing: 22.06.2001
(51) Int. Cl.: A01N 43/54, A01N 43/40, A01N 25/12

(54) **ENHANCEMENT OF THE ACTIVITY OF CAROTENOID BIOSYNTHESIS INHIBITOR HERBICIDES**
ERHÖHUNG DER WIRKUNG VON HERBIZIDEN, DIE DIE CAROTENOID-SYNTHESE HEMMEN
OPTIMISATION DE L'ACTIVITE D'HERBICIDES INHIBITEURS DE LA BIOSYNTHESE DE CAROTENOIDE

(30) Priority: 23.06.2000 US 213819 P
(43) Date of publication of application: 19.03.2003
(73) Proprietor: BASF AKTIENGESELLSCHAFT, 67056 Ludwigshafen (DE)
(72) Inventor: AVEN, Michael, 55131 Mainz (DE); BRANDT, Astrid, 55116 Mainz (DE); NELGEN, Norbert, 55270 Jugenheim (DE)
(86) International application number: PCT/EP2001/007109
(87) International publication number: WO 2001/097613

(56) References cited:
- EP-A- 0 292 154
- EP-A- 0 878 128
- WO-A-92/22204
- DATABASE CA [Online] CHEMICAL ABSTRACTS SERVICE, COLUMBUS, OHIO, US; KONNO, KAZUHIKO ET AL: "Synergistic herbicide compositions containing a nicotinamide derivative and a pyrazole derivative, for rice" retrieved from STN Database accession no. 109:165724 CA XP002191595 & JP 63 079804 A (MITSUBISHI PETROCHEMICAL CO., LTD., JAPAN) 9 April 1988 (1988-04-09)
- DATABASE CA [Online] CHEMICAL ABSTRACTS SERVICE, COLUMBUS, OHIO, US; NILSSON, HJALMAR ET AL: "Persistence and mobility of herbicides in arable soil. Investigations in 1986-1987" retrieved from STN Database accession no. 111:128934 CA XP002191600 & SWED. CROP PROT. CONF. (1989), 30TH(2), 270-7 , 1989,

## Description

As a general rule, inert carrier ingredients must be used to formulate crop protection agents such as herbicidal compounds so that farmers can apply them conveniently and safely. The choice of formulation type and inert carrier ingredients often determines to a significant extent whether the active ingredient can express its full efficacy on application.

Farmers frequently apply pre-emergence herbicides and soil insecticides by broadcasting granular formulations directly onto the soil, as described for example in "Chemistry and Technology of Agrochemical Formulations", edited by D.A. Knowles, Kluwer Academic Publishers, Dordrecht / Boston / London, 1998 (ISBN 0-7514-0442-8) p. 71. Granular formulations of soil-applied herbicides can provide considerable advantages under practical field conditions because planting and application can be carried out in a single operation, thus saving time and money. This application method, while convenient, does not necessarily ensure that the activity of the crop protection agent will be fully expressed.

The International Patent Application WO 92/22204 suggests that for certain benzamide herbicides such as isoxaben (N-[3-(1-ethyl-1-methylpropyl)-5-isoxazolyl]-2,6-dimethyxybenzamide), the mobility in the soil can be decreased and/or the efficacy can be increased by applying these compounds in the presence of cyclodextrins.

Certain carotenoid biosynthesis inhibitor herbicides are described in GB 2,087,887, EP 447,004, WO94/22833, EP 692,474, EP 693490, EP 694538, EP723,960, WO 98/56789 and EP 902,026. The efficacy of said herbicides when applied to the soil can sometimes be diminished due to their tendency to bind to the soil. Said binding reduces bioavailability and prevents the full expression of herbicidal activity.

It is an object of this invention to provide methods for enhancing the pre-emergence performance of said herbicidal agents. It is another object of this invention to provide solid granular compositions of carotenoid biosynthesis inhibitor herbicides and at least one inert solid carrier, as well methods for the use of said compositions in the control of weeds.

Although carotenoid biosynthesis inhibitor herbicides such as those described in GB 2,087,887, EP 447,004, WO94/22833, EP 692,474, EP 693490, EP 694538, EP723,960, WO 98/56789 and EP 902,026 are effective herbicidal agents, there is ongoing research to provide means for maximizing the expression of herbicidal activity under field conditions so that the rate of said required for effective weed control can be kept to a minimum, both for economic and environmental reasons.

Surprisingly it has now been found that the pre-emergence herbicidal performance of compounds of structural formula I 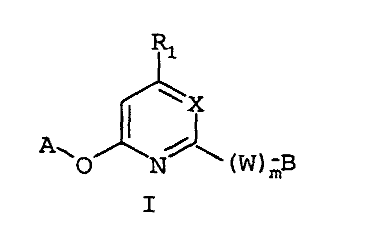 wherein
A represents a group of formula c 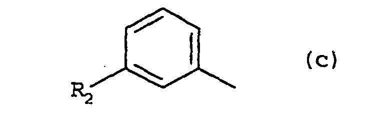 wherein
R² is a halogen atom or a C₁₋₃ haloalkyl or C₁₋₃ haloalkoxy group;
B represents a phenyl, pyridyl, pyrazolyl or thienyl ring being optionally substituted by one or more halogen atoms, alkyl, haloalkyl or haloalkoxy groups;
R₁ represents a hydrogen or halogen atom or an alkyl or alkoxy group;
X represents CH or N;
W represents -O-, -OCH₂- or -CONH-, and
m is 0 or 1
is increased by applying an effective amount of said herbicidal compound directly to the soil in which the plants are cultivated in the form of a solid granule which contains said herbicidal compound and at least one inert solid carrier.

Furthermore the invention relates to a method for the control of undesired weeds at a locus which comprises treating said locus with a solid granule according to the invention.

These and other objects and features of the invention will become more apparent from the detailed description set forth hereinbelow.

Although carotenoid biosynthesis inhibitor herbicides such as those described in GB 2,087,887, EP 447,004, WO94/22833, EP 692,474, EP 693490, EP 694538, EP723,960, WO 98/56789 and EP 902,026 are effective herbicidal agents, there is ongoing research to provide means for maximizing the expression of herbicidal activity under field conditions so that the rate of said required for effective weed control can be kept to a minimum, both for economic and environmental reasons.

Surprisingly it has now been found that the pre-emergence herbicidal performance of compounds of structural formula I 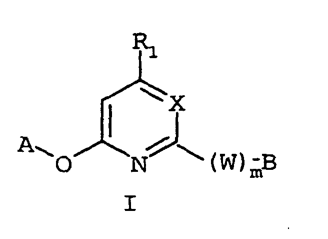 wherein A, B, X, W, R₁ and m are defined as above is improved by applying an effective amount of said herbicidal compound directly to the soil in the form of a solid granule which contains said herbicidal compound and at least one inert solid carrier.

Preferred herbicidal compounds I are those regioisomers of structural formula IA
wherein R₂ is a chlorine atom, or a trifluoromethyl, pentafluoroethyl, trifluoromethoxy or difluoromethoxy group.

More preferred are those compounds of formula IA
wherein
B represents a phenyl being optionally substituted by one or more halogen atoms, alkyl, haloalkyl or haloalkoxy groups;
R₁ represents a hydrogen or halogen atom or an alkyl or alkoxy group;
X represents CH or N; and
W represents -CONH-, and
m is 0 or 1.

Most preferred are N-(4-fluorophenyl)-6-[3-trifluoromethyl)phenoxy]-2-pyridine carboxamide(picolinafen) or 4-(3-trifluoromethylphenoxy)-2-(4-trifluoromethylphenyl)-pyrimidin, hereinafter referred to as TTP.

The term "optionally substituted" as used hereinbefore and hereinbelow refers to a group or moiety which may be unsubstituted or substituted by one or more, preferably one or two substituents.

The term "alkyl, alkoxy, haloalkyl or haloalkoxy" as used hereinbefore and hereinbelow refers to an alkyl, haloalkyl or haloalkoxy group or moiety with up to 12, preferably 1 to 6, in particular 1 to 4 carbon atoms. The haloalkyl and haloalkoxy groups refer to alkyl or alkoxy groups which are substituted by one or more halogen atoms, preferably fluorine atoms. Preferred are the fluoroalkyl and fluoroalkoxy groups of formula

-(O)ᵣ-C_{Y}H_{(2Y+1-Z)}F_{Z}

wherein r represents 0 or 1, Y represents an integer from 1 to 12, and Z represents an integer from 1 to an integer of (2Y+1). Most preferred alkyl, haloalkyl or haloalkoxy groups are methyl, ethyl, propyl, butyl, methoxy, ethoxy, trifluoromethyl, 2,2,2-trifluoroethyl, pentafluoroethyl and trifluoromethoxy.

The term "halogen" as used hereinbefore and hereinbelow refers to a fluorine, chlorine, bromine or iodine atom, preferably a fluorine or chlorine atom, more preferably a fluorine atom.

It is also an object of this invention to provide solid granular compositions of herbicidal compounds of structural formula I 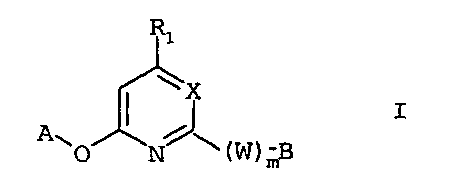 wherein A, B, X, W, R₁ and m are defined as above and at least one inert solid carrier.

Most surprisingly, the granules used according to the present invention also expand the efficacy profile of the compounds of formula I since these compositions can be successfully applied in normal application amounts to control weeds on crop on which they had previously required uneconomically high doses of the compounds of formula I.

The solid granules consists essentially of
(a) 0.1 to 100 g/kg of at least one herbicidal compound of formula I; and
(b) 900 to 999.9 g/kg of one or more solid carrier selected from the group consisting of granular gypsum, clays such as kaolin or bentonite, polyvinylpyrrolidone, polyvinylacetate, cyclodextrin, sugar and mixtures or co-polymers thereof and optionally at least one solid auxiliary. A particularly preferred solid carrier is cyclodextrin.

Conventionally used solid carriers may be used in the solid granules according to the present invention. Preferably used are such solid matters, which are essentially insoluble in water and have large surfaces and/or high absorbencies, in particular, natural mineral powders such as kaolin, argillaceous earth, talcum; chalk, quartz, atapulgite, montmorillonite and synthetic mineral powders such as silicic acid, alumina, silicates. The solid carriers are preferably selected from the group consisting of clays such as kaolin or bentonite, silica, inorganic salts, polyvinylpyrrolidone, polyvinylacetate, cyclodextrin, sugar and mixtures or co-polymers thereof and optionally at least one solid auxiliary.

Conventionally used additional solid ingredients may be used in the solid granules according to the present invention. Preferably disintegrants, which are highly soluble in water, in particular, salts such as potassium sulfate, ammonium sulfate, potassium carbonate, sodium hydrogencarbonate and sodium acetate trihydrate are utilized.

The solid formulation according to the present invention preferably comprises 0 to 10 % by weight, in particular, 0.05 to 5 % by weight of at least one disintegrant.

Further solid ingredients are dispersants or wetting agents. Suitable dispersants are so-called water-soluble soaps, as well as water-soluble synthetic surface-active compounds. Soaps usually are alkali, earth alkali or optionally substituted ammonium salts of higher fatty acids (C₁₀-C₂₀), *e.g.* the sodium or potassium salts of oleic or stearic acid or of mixtures of natural fatty acids which are prepared, for example, from coconut or tallow oil. Furthermore, methyl-taurine salts of fatty acids may be used. However, so-called synthetic surfactants are preferably used, especially fatty sulfonates, fatty sulfates or alkyl aryl sulfonates. The fatty sulfates or fatty sulfonates are normally used as alkali, earth alkali or optionally substituted ammonium salts and have an alkyl moiety of 8 to 22 carbon atoms, whereby alkyl also means the alkyl moiety of acyl residues, such as the sodium or calcium salt of lignin sulfonic acid, of sulfuric acid dodecylate, or of a mixture of fatty alcohols prepared from natural fatty acids, in particular, sodium lignin sulfonate. This also includes the salts of sulfuric acid esters, sulfonic acids and adducts of fatty alcohols and ethylene oxide. Alkyl aryl sulfonates are, for example, the sodium, calcium or triethyl ammonium salts of dodecyl benzene sulfonic acid, dibutyl naphthalene sulfonic acid or of a condensate of naphthalene sulfonic acid and formaldehyde. Furthermore, phosphates, such as the salts of the phosphoric acid ester of a p-nonylphenol-(4-14)-ethylene oxide adduct or phospholipids, may be used. In addition, non-ionic dispersants may be used. Preferred are block polymers obtainable from propylene oxide and ethylene oxide, in particular, block polymers which consist of a polyoxypropylene core having a molecular weight of about 3,000 to about 3,500 and the remainder having a combined molecular weight of about 6,000 to 7,000 comprising ethylene oxide units.

In preferred embodiments, the dispersants are selected from the commercially available components:
Tensiofix LX special, a sodium lignin sulfonate available from Omnichem S.A., 1348 Louvain-La-Neuve, Belgium;
Ufoxane 3 A, a sodium lignin sufonate, (available from Borregaard);
Borresperse NH, an ammonium lignin sufonate, (available from Borregaard);
Geropon TA/72, a sodium polycarboxylate (available from Rhodia, formerly Rhone-Poulenc);
Soprophor AS/222, an ethoxylated fatty alcohol adsorbed on silica, (available from Rhodia, formerly Rhone-Poulenc); and Pluronic PE 10500, a block polymer obtained from propylene oxide and ethylene oxide, (available from BASF Corporation).

The solid formulation according to the present invention preferably comprises 0 to 25 % by weight, in particular 5 to 15 % of at least one dispersant.

Suitable wetting agents are, as a rule, salts of long chained alkyl sulfates. The fatty sulfates are normally used as alkali, earth alkali or optionally substituted ammonium salts and have an alkyl moiety of 8 to 22 carbon atoms. Particularly preferred is sodium lauryl sulfate, commercially obtainable as Tensiofix BCZ, a sodium alkyl sulfate, available from Omnichem S.A., 1348 Louvain-La-Neuve, Belgium or as Rewopol NLS 90 available from Witco GmbH, Germany.

The solid formulation according to the present invention preferably comprises 0 to 10 % by weight, in particular, 0.5 to 2.5 % of at least one wetting agent.

The solid carrier preferably comprises at least one cyclodextrin of formula II 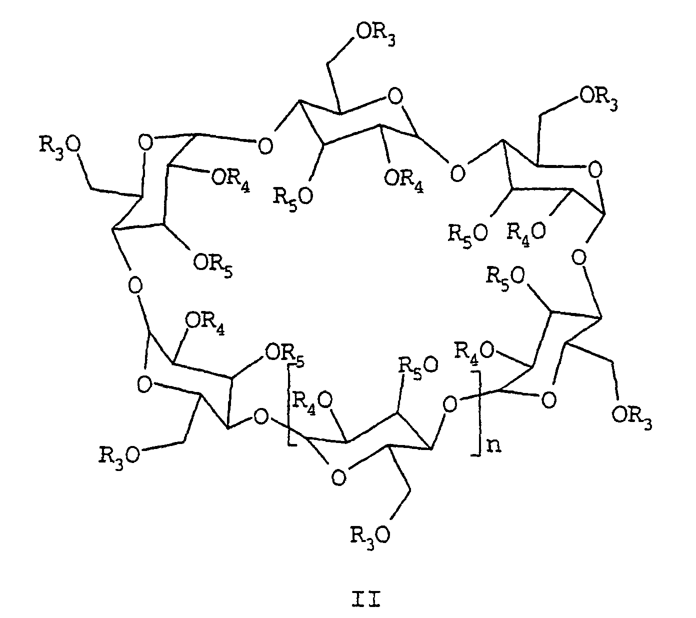 wherein
R₃, R₄ and R₅ each independently represent a hydrogen atom or a C₁₋₄ alkyl, C₁₋₄ alkanoyl or a C₁₋₄ hydroxyalkyl group; and
n is 1, 2 or 3.

The cyclodextrins, wherein R₃ through R₅ represent a hydrogen group are particularly preferred.

Most preferred is β-cyclodextrin (n =2).

In another preferred embodiment of the present invention the solid carrier comprises
(b1) 50 to 250 g/kg of one or more cyclodextrin of formula II, in particular β-cyclodextrin; and
(b2) 650 to 949.9 g/kg of one or more solid carrier selected from the group consisting of granular gypsum, clays such as kaolin or bentonite, silica, inorganic salts, polyvinylpyrrolidone, polyvinylacetate, sugar and mixtures or co-polymers thereof and optionally at least one solid auxiliary.

The herbicidal compositions of this invention may comprise other compounds having biological activity in addition to the herbicides of formula I, *e.g.* compounds having similar or complementary herbicidal activity or compounds having plant growth regulating, fungicidal or insecticidal activity.

These mixtures of herbicides can have a broader spectrum of activity than the compound of general formula I alone.

Examples of the other herbicidal compounds are acifluorfen, aclonifen, alachlor, alloxydim, ametryn, amitrole, anilazine, anilofos, asulam, atrazine, azinphos-methyl, benazolin, benfluralin, benfuresate, bensulide, bentazone, benzofenap, bifenox, bromacil, brombutide, bromoxynil, butachlor, butamifos, butenachlor, butylate, carfentrazone-ethyl, chloramben, chlorbromuron, chlorbufam, chlorimuron, chlornitrofen, chlorotoluron, chlorthiamid, cinmethylin, clomozone, clopyralid, cyanazine, cycloate, 2,4-D, daimuron, desmetryn, dicamba, dichlobenil, dichloroprop-P, diclofopmethyl, diflufenican, dimefuron, dimepiperate, dimethachlor, dimethatryn, dimehtenamid, dinitramine, dinoterb, dithiopyr, esprocarb, ethafluralin, ethofumesate, ethoxyfen-ethyl, fenoxaprop, fenuron, flamprop-M-isopropyl, flamprop-M-methyl, fluazifop, fluchloralin, flufenacet, flumioxazin, fluometuron, fluoroglycofen, flupoxam, fluridone, flurochloridone, flurprimidol, flurtamone, fluthiacet-methyl, fomesafen, glufosinate, haloxyfop, ioxynil, isoxaflutole, lactofen, linuron, mecoprop, mecoprop-P, mefenacet, metazachlor, metobenzuron, metobromuron, metolachlor, metoxuron, monolinuron, naproanilide, napropamide, naptalam, norflurazon, orbencarb, oxadiazon, oxyfluorfen, pebulate, pendimethalin, picloram, pretilachlor, prodiamine, prometon, prometryn, propachlor, propanil, propisochlor, propyzamide, prosulfocarb, pyrazoxyfen, pyributicarb, siduron, tebuthiuron, terbacil, terbumeton, terbuthylazine, terbutryn, thiazopyr, thiobencarb, tiocarbazil, triallate, triclopyr and trifluralin.

The appropriate relative amounts of active ingredient of formula I and the solid carrier, in accordance with the invention, between 1:500 and 1:2, preferably between 1:200 and 1:5 and, in particular, between 1:125 and 1:10. In general, and within certain limits, the herbicidal efficacy is enhanced to a higher degree by the addition of larger content of cyclodextrin in the solid carrier, as is shown in the experimental results described below.

It is also an object of this invention to provide methods for the use of the solid granular formulations of the invention in the control of weeds.

The compositions according to the invention possess a high herbicidal activity within a wide concentration range and at low dosages, and may readily be used in agriculture, especially for the selective control of undesired plants such as *Alopecurus myosuroides, Echinochloa crus-galli, Lolium perenne, Setaria viridis, Galium aparine, Matricaria inodora vulgare, Papaver rhoeas, Stellaria media, Veronica persica, Lamium purpureum, Viola arvensis, Abutilon theophrasti, Ipomoea purpurea* and *Amaranthus retroflexus* by pre-emergence application, and particularly in certain crops, such as cereals, in particular barley and wheat, maize and rice.

Recommended doses for various applications in the absence of a solid carrier are known for the herbicidal compounds of formula I. The efficacy thereof can be enhanced in accordance with the invention. For instance, addition of the carriers suggested here can (depending on the active ingredient, the carrier and their respective amounts) reduce the amount of active ingredient per hectare required in these recommendations by half or more, so that additional weeds can be controlled at reasonable doses of the compound of formula I.

Surfactants may be nonionic, anionic, cationic or zwitterionic substances with good dispersing, emulsifying and wetting properties depending on the nature of the compound according to general formula I to be formulated. Surfactants may also include mixtures of individual surfactants.

Examples of formulations according to the invention are shown in the following formulations A through G. Ingredients used in these formulations are shown below.

| Ingredients Used in Formulations A-G | |
|---|---|
| Trade Name | Chemical Identity |
| Agrimer® XL | Polyvinylpyrrolidone (PVP) |
| Agrimer® VA-6 | crosslinked Copolymer of vinyl pyrrolidone and vinyl acetate |
| Alpha W6 | α-cyclodextrin |
| Beta W7 | β-cyclodextrin |
| Gamma W8 | γ-cyclodextrin |
| Tensiofix® BCZ | sodium alkyl sulfate |
| Tensiofix® LX Special | lignosulfonate |

| Formulation A: TTP 50 g/kg (Kaolin Granules) | | |
|---|---|---|
| Ingredient | Component | Amount [g/kg] |
| TTP | active ingredient | 50.0 |
| Tensiofix® LX Special | dispersant | 90.0 |
| Tensiofix ® BCZ | wetting agent | 10.0 |
| Agrimer XL | carrier | 20.0 |
| kaolin | carrier | 830.0 |

The ingredients are milled. Subsequently, 15 ml of water is added and the resulting pasty mass is granulated. The resulting granules are dried in at 40 °C for 15 minutes.

| Formulations B to D: TTP (Cyclodextrin Powder and Granules) | | | | |
|---|---|---|---|---|
| Ingredient | Component | Amount (g) | | |
| | | B | C | D |
| TTP | active ingredient | 1.5 | 2.0 | 2.0 |
| Alpha W6 | carrier | 3.8 | -- | -- |
| Beta W7 | carrier | -- | 0.6 | -- |
| Gamma W8 | carrier | -- | -- | 6.9 |
| Water | auxiliary | 23.2 | 26.0 | 23.2 |

The active ingredient is milled to a particle size of < 15 µm using a pin mill. The cyclodextrin is dissolved in water at 30 to 40 °C. Subsequently, the milled active ingredient is added and heated to 65 °C. The mixture is then vigorously mixed using for 15 minutes. Finally the water is evaporated to yield the cyclodextrin complex as white powder which is dried for 3 days at 30°C.

| Formulation E: TTP 10 g/kg (Cyclodextrin/Sugar Granules or Powder) | | |
|---|---|---|
| Ingredient | Component | Amount [g] |
| Formulation D | active ingredient / cyclodextrin | 0.4 |
| Sugar | carrier | 8.8 |

The ingredients are milled together to yield a homogenous powder. The mixture is then compressed into small granules. The ungranulated powder can be applied as such or mixed with other materials to be applied directly to the soil such as a fertilizer.

| Formulation F: TTP 50 g/kg GR (Polyvinylpyrrolidone Granules) | | |
|---|---|---|
| Ingredient | Component | Amount [g] |
| TTP | active ingredient | 50.0 |
| Agrimer VA-6 | carrier | 950.0 |

The ingredients are dissolved in 500 ml of isopropanol in a round-bottomed flask under heating to 40°C. The solvent is evaporated in vacuo using a rotary evaporator. The resulting flakes are removed from the flask using a spatula.

| Formulation G: TTP 10 g/kg GR (Cyclodextrin/Granular Gypsum) | | |
|---|---|---|
| Ingredient | Component | Amount [g] |
| Formulation D | active ingredient / cyclodextrin | 2.5 |
| Granular gypsum | carrier | 25.0 |

The ingredients are mixed together in a shaker bottle and shaken for 2 minutes at ambient temperature to yield granules coated with Formulation D.

To illustrate the invention, specific examples are set forth below.

### EXAMPLE 1

### Greenhouse Comparison of the Pre-emergence Herbicidal Efficacy of Granular Formulations of TTP With Unformulated Technical TTP

Seeds of the monocotyledonous and dicotyledonous test plants are separately mixed with potting soil and planted on top of approximately one inch of soil in separate pint cups. After planting, the cups are subjected to the following treatments:

| TREATMENT | INGREDIENTS |
|---|---|
| H | TTP technical (acetone solution) |
| I | TTP 1 g/kg GR GR (kaolin + Agrimer XL) |
| J | TTP 10 g/kg GR (PVP: Agrimer VA 6) |
| K | TTP 10 g/kg Powder GR (cyclodextrin: gamma WS) |

Technical TTP (treatment H) is applied as a dispersion in acetone using a single-nozzle overhead track pneumatic sprayer, while granular formulations (treatments I-K) are applied by shaking the solid granules directly and evenly onto the soil surface.

The treated cups are then placed on greenhouse benches, watered and cared for in accordance with conventional greenhouse procedures. Twenty days after treatment (DAT), the seedling plants are examined, and the % weed control as compared to untreated check is recorded (Table I). Crop phytotoxicity is assessed visually at 11 and 20 DAT and is given in Table II.

As can be seen from Tables I and II, a clear increase in activity of TTP results from the granular formulations of TTP in comparison with unformulated TTP. This increase is most pronounced (4x) with the cyclodextrin granules K, which control *Alopecurus* and *Galium* at 60 g/ha while 240 g/ha are required with the unformulated technical TTP dispersion in acetone.

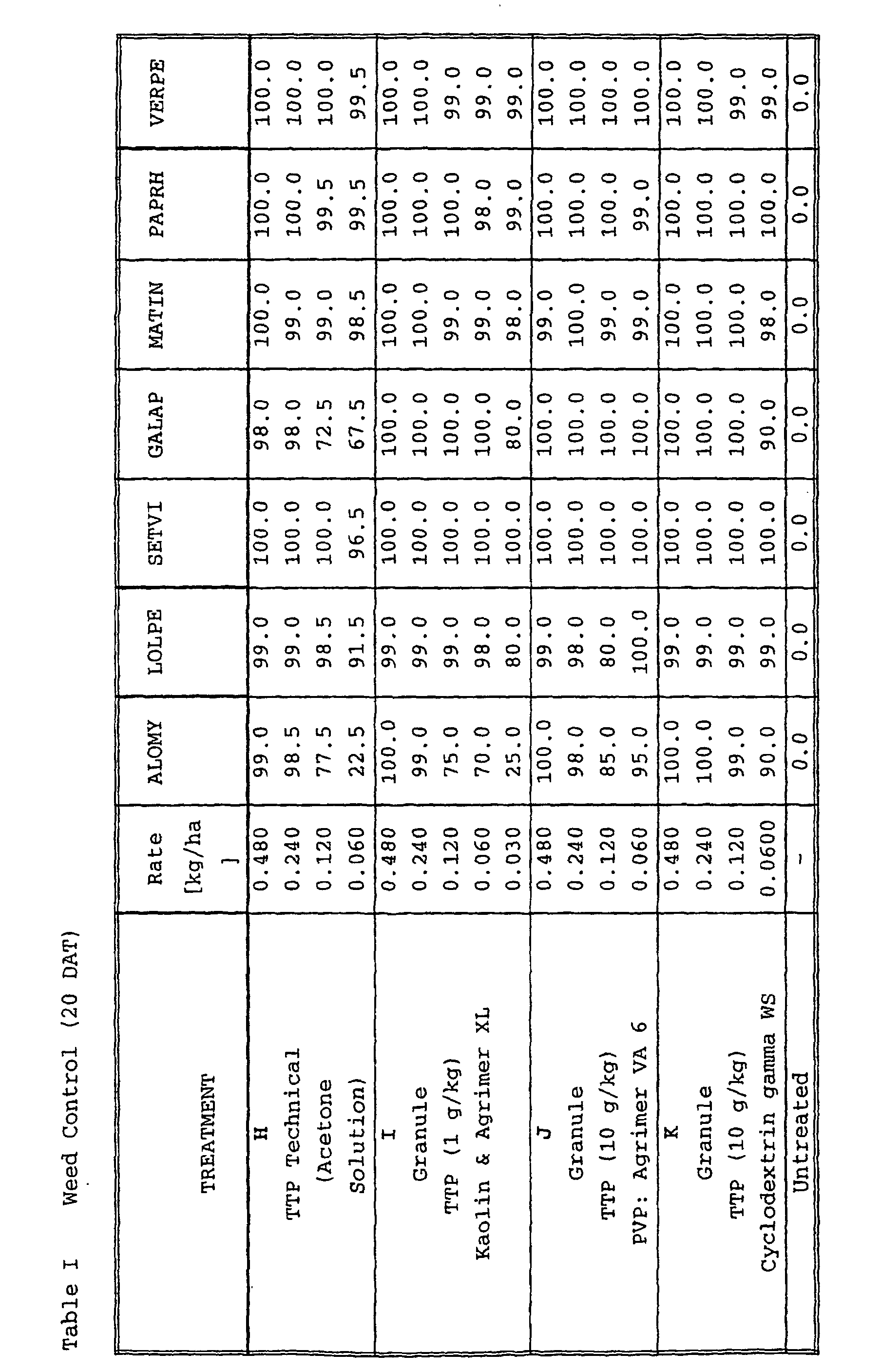

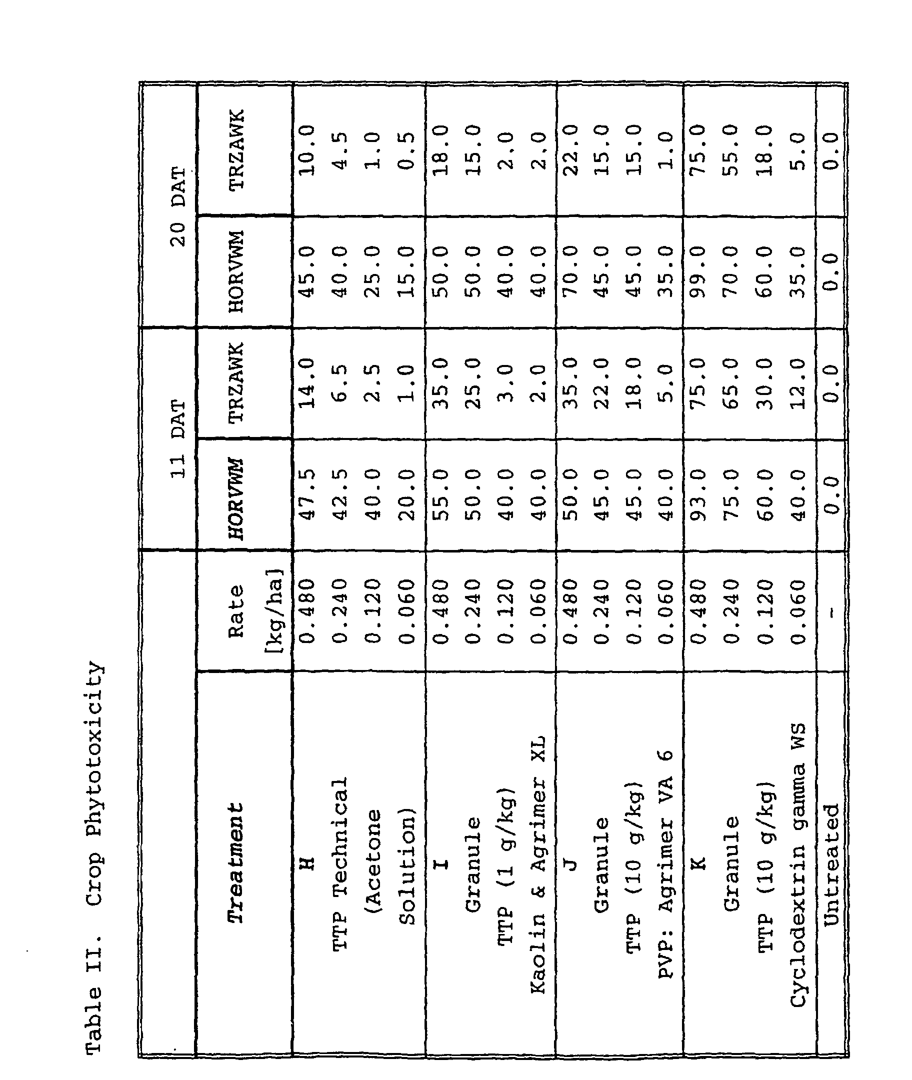

| PLANT SPECIES EMPLOYED IN HERBICIDAL EVALUATIONS | | |
|---|---|---|
| **Header Abbr.** | **Common Name** | **Scientific Name** |
| TRZAWK | *Wheat*, *Winter* *(variety Kanzler)* | *Triticum aestivum* (variety *Kanzler*) |
| HORVWM | Barley, Winter (variety Mammut) | *Hordeum vulgare (variety Mammut)* |
| ALOMY | Blackgrass | *Alopecurus myosuroides* |
| LOLPE | Ryegrass | *Lolium perenne* |
| SETVI | Green fostail | *Setaria viridis* |
| GALAP | Galium | *Galium aparine* |
| MATIN | Matricaria | *Matricaria inodora vulgare* |
| PAPRH | Poppy | *Papaver rhoeas* |
| VERPE | Veronica | *Veronica persica* |

## Claims

1. A method of increasing the efficacy of a herbicidal compound of formula IA 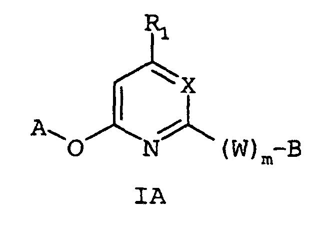 wherein
A represents a group of formula c: 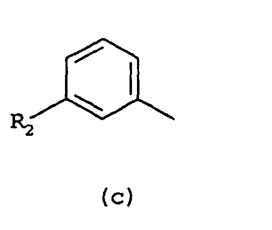 wherein
R₂ is a halogen atom or a C₁₋₃ haloalkyl or C₁₋₃ haloalkoxy group;
B represents a phenyl, pyridyl, pyrazolyl or thienyl ring being optionally substituted by one or more halogen atoms, alkyl, haloalkyl or haloalkoxy groups;
R¹ represents a hydrogen or halogen atom or an alkyl or alkoxy group;
X represents CH or N;
W represents -O-, -OCH₂- or -CONH-, and
m is 0 or 1
which comprises applying an effective amount of said herbicidal compound directly to the soil in the form of a solid granule which contains said herbicidal compound and at least one inert solid carrier.

2. The method according to claim 1 wherein R² of said herbicidal compound IA is a chlorine atom, or a trifluoromethyl, pentafluoroethyl, trifluoromethoxy or difluoromethoxy group.

3. The method according to claim 2
wherein
A and B each independently represent a phenyl being optionally substituted by one or more halogen atoms, alkyl, haloalkyl or haloalkoxy groups;
R₁ represents a hydrogen or halogen atom or an alkyl or alkoxy group;
X represents CH or N; and
W represents -CONH-, and
m is 1.

4. The method according to claim 3
wherein the herbicidal compound IA is selected from the group consisting of
N-(4-fluorophenyl)-6-[3-trifluoromethyl)phenoxy]-2-pyridine carboxamide(picolinafen), and
4-(3-trifluoromethylphenoxy)-2-(4-trifluoromethylphenyl)-pyrimidin (TTP).

5. The method according to claim 1 wherein said solid carrier is selected from the group consisting of clays such as kaolin or bentonite, silica, inorganic salts, polyvinylpyrrolidone, polyvinylacetate, cyclodextrin, sugar and mixtures or co-polymers thereof.

6. The method according to claim 1 wherein the solid granule essentially consists of
(a) 0.1 to 100 g/kg of a herbicidal compound of formula IA; and
(b) 900 to 999.9 g/kg of at least one inert solid carrier and optionally at least one solid auxiliary.

7. The method according to claim 1 wherein the compound of formula IA is admixed with a second active compound which is selected from the group consisting of
acifluorfen, aclonifen, alachlor, alloxydim, ametryn, amitrole, anilazine, anilofos, asulam, atrazine, azinphos-methyl, benazolin, benfluralin, benfuresate, bensulide, bentazone, benzofenap, bifenox, bromacil, brombutide, bromoxynil, butachlor, butamifos, butenachlor, butylate, carfentrazone-ethyl, chloramben, chlorbromuron, chlorbufam, chlorimuron, chlornitrofen, chlorotoluron, chlorthiamid, cinmethylin, clomozone, clopyralid, cyanazine, cycloate, 2,4-D, daimuron, desmetryn, dicamba, dichlobenil, dichloroprop-P, diclofop-methyl, dimefuron, dimepiperate, dimethachlor, dimethatryn, dimehtenamid, dinitramine, dinoterb, dithiopyr, esprocarb, ethafluralin, ethofumesate, ethoxyfen-ethyl, fenoxaprop, fenuron, flamprop-M-isopropyl, flamprop-M-methyl, fluazifop, fluchloralin, flufenacet, flumioxazin, fluometuron, fluoroglycofen, flupoxam, fluridone, flurochloridone, flurprimidol, flurtamone, fluthiacet-methyl, fomesafen, glufosinate, haloxyfop, ioxynil, isoxaflutole, lactofen, linuron, mecoprop, mecoprop-P, mefenacet, metazachlor, metobenzuron, metobromuron, metolachlor, metoxuron, monolinuron, naproanilide, napropamide, naptalam, norflurazon, orbencarb, oxadiazon, oxyfluorfen, pebulate, pendimethalin, picloram, pretilachlor, prodiamine, prometon, prometryn, propachlor, propanil, propisochlor, propyzamide, prosulfocarb, pyrazoxyfen, pyributicarb, siduron, tebuthiuron, terbacil, terbumeton, terbuthylazine, terbutryn, thiazopyr, thiobencarb, tiocarbazil, triallate, triclopyr and trifluralin.

8. A solid granule which consists essentially of
(a) 0.1 to 100 g/kg of at least one herbicidal compound of formula IA; 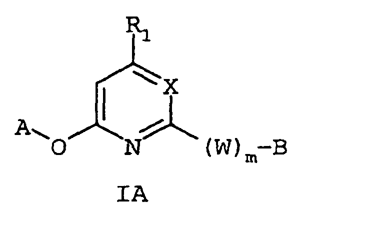 wherein A, B, R¹, X, W and m are defined as in claim 1; and
(b) 900 to 999.9 g/kg of one or more solid carrier selected from the group consisting of granular gypsum, clays such as kaolin or bentonite, polyvinylpyrrolidone, polyvinylacetate, cyclodextrin, sugar and mixtures or co-polymers thereof and optionally at least one solid auxiliary.

9. A solid granule according to Claim 8, wherein the solid carrier is a cyclodextrin of formula II 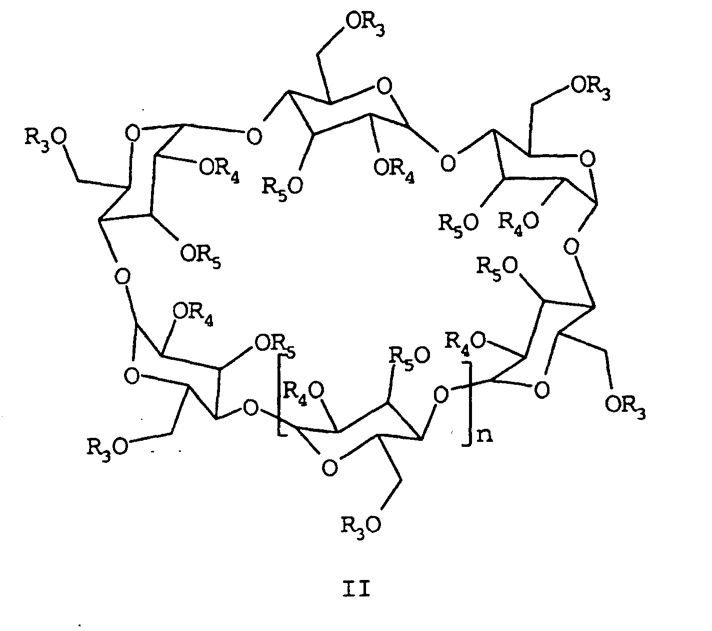 wherein
R₃, R₄ and R₅ each independently represent a hydrogen atom or a C₁₋₄ alkyl, C₁₋₄ alkanoyl or a C₁₋₄ hydroxyalkyl group; and n is 1, 2 or 3.

10. A solid granule according to Claim 9, wherein the solid carrier is a cyclodextrin of formula II, wherein R₃, R₄ and R₅ each represent a hydrogen atom and n is 2.

11. A solid granule according to Claim 8, which comprises
(b1)50 to 250 g/kg of one or more cyclodextrin of formula II; and
(b2) 650 to 949.9 g/kg of one or more solid carrier selected from the group consisting of granular gypsum, clays such as kaolin or bentonite, silica, inorganic salts, polyvinylpyrrolidone, polyvinylacetate, sugar and mixtures or co-polymers thereof and optionally at least one solid auxiliary.

12. A method for the control of undesired weeds at a locus which comprises treating said locus with a solid granule which consists essentially of
(a) 0.1 to 100 g/kg of at least one herbicidal compound of formula IA; 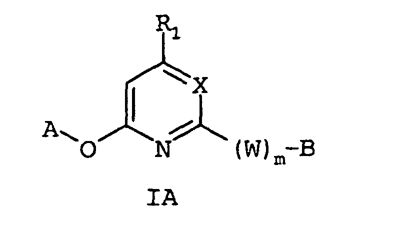 wherein A, B, R¹, X, W and m are defined as in claim 1; and
(b) 900 to 999.9 g/kg of one or more solid carrier selected from the group consisting of granular gypsum, clays such as kaolin or bentonite, polyvinylpyrrolidone, polyvinylacetate, cyclodextrin, sugar and mixtures or co-polymers thereof and optionally at least one solid auxiliary.

13. A method according to Claim 12 wherein said weeds are *Galium* spp. or *Alopecurus* spp.

## Patentansprüche

1. Verfahren zur Erhöhung der Wirksamkeit einer herbiziden Verbindung der Formel IA, 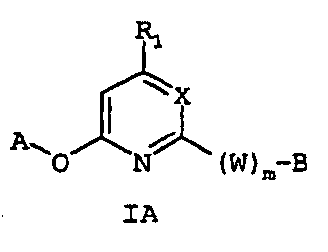 in der
A eine Gruppe der Formel c bedeutet: 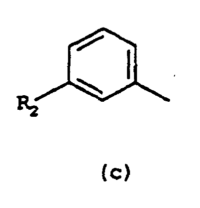 in der
R₂ ein Halogenatom oder eine C₁₋₃-Halogenalkyl- oder C₁₋₃-Halogenalkoxygruppe bedeutet;
B einen Phenyl-, Pyridyl, Pyrazolyl- oder Thienylring, der gegebenenfalls durch ein(e) oder mehrere Halogenatome oder Alkyl-, Halogenalkyl- oder Halogenalkoxygruppen substituiert ist, bedeutet;
R¹ ein Wasserstoff- oder Halogenatom oder eine Alkyl- oder Alkoxygruppe bedeutet;
X CH oder N bedeutet;
W -O-, -OCH₂- oder -CONH- bedeutet, und
m 0 oder 1 bedeutet,
**dadurch gekennzeichnet, daß** man eine wirksame Menge dieser herbiziden Verbindung direkt auf den Boden in Form eines festen Granulats, das diese herbizide Verbindung sowie mindestens einen inerten festen Träger enthält, ausbringt.

2. Verfahren nach Anspruch 1, wobei R² der herbiziden Verbindung IA ein Chloratom oder eine Trifluormethyl-, Pentafluorethyl-, Trifluormethoxy- oder Difluormethoxygruppe bedeutet.

3. Verfahren nach Anspruch 2,
wobei
A und B jeweils unabhängig ein Phenyl, das gegebenenfalls durch ein(e) oder mehrere Halogenatome oder Alkyl-, Halogenalkyl- oder Halogenalkoxygruppen substituiert ist, bedeutet;
R₁ ein Wasserstoff- oder Halogenatom oder eine Alkyl- oder Alkoxygruppe bedeutet;
X CH oder N bedeutet; und
W -CONH- bedeutet, und
m 1 bedeutet.

4. Verfahren nach Anspruch 3,
wobei die herbizide Verbindung IA aus der Gruppe bestehend aus
N-(4-Fluorphenyl)-6-[3-trifluormethyl)phenoxy]-2-pyridincarboxamid (Picolinafen) und
4-(3-Trifluormethylphenoxy)-2-(4-trifluormethylphenyl)pyrimidin (TTP) stammt.

5. Verfahren nach Anspruch 1, wobei der feste Träger aus der Reihe bestehend aus Tonen wie Kaolin oder Bentonit, Silica, anorganischen Salzen, Polyvinylpyrrolidon, Polyvinylacetat, Cyclodextrin, Zucker und Mischungen oder Copolymeren davon stammt.

6. Verfahren nach Anspruch 1, wobei das feste Granulat im wesentlichen aus
(a) 0,1 bis 100 g/kg einer herbiziden Verbindung der Formel IA; und
(b) 900 bis 999,9 g/kg an mindestens einem inerten festen Träger und gegebenenfalls mindestens einem festen Hilfsstoff
besteht.

7. Verfahren nach Anspruch 1, wobei die Verbindung der Formel IA mit einem zweiten Wirkstoff, der aus der Reihe bestehend aus
Acifluorfen, Aclonifen, Alachlor, Alloxydim, Ametryn, Amitrol, Anilazin, Anilofos, Asulam, Atrazin, Azinphosmethyl, Benazolin, Benfluralin, Benfuresat, Bensulid, Bentazon, Benzofenap, Bifenox, Bromacil, Brombutid, Bromxynil, Butachlor, Butamifos, Butenachlor, Butylat, Carfentrazonethyl, Chloramben, Chlorbromuron, Chlorbufam, Chlorimuron, Chlornitrofen, Chlortoluron, Chlorthiamid, Cinmethylin, Clomozon, Clopyralid, Cyanazin, Cycloat, 2,4-D, Daimuron, Desmetryn, Dicamba, Dichlobenil, Dichlorprop-P, Di-clofopmethyl, Dimefuron, Dimepiperat, Dimethachlor, Dimethatryn, Dimethenamid, Dinitramin, Dinoterb, Dithiopyr, Esprocarb, Ethafluralin, Ethofumesat, Ethoxyfenethyl, Fenoxaprop, Fenuron, Flamprop-M-isopropyl, Fluazifop, Fluchloralin, Flufenacet, Flumioxazin, Fluometuron, Fluoroglycofen, Flupoxam, Fluridon, Flurochloridon, Flurprimidol, Flurtamon, Fluthiacetmethyl, Fomesafen, Glufosinat, Haloxyfop, Ioxynil, Isoxaflutol, Lactofen, Linuron, Mecoprop, Mecoprop-P, Mefenacet, Metazachlor, Metobenzuron, Metobromuron, Metolachlor, Metoxuron, Monolinuron, Naproanilid, Napropamid, Naptalam, Norflurazon, Orbencarb, Oxadiazon, Oxyfluorfen, Pebulat, Pendimethalin, Picloram, Pretilachlor, Prodiamin, Prometon, Prometryn, Propachlor, Propanil, Propisochlor, Propyzamid, Prosulfocarb, Pyrazoxyfen, Pyributicarb, Siduron, Tebuthiuron, Terbacil, Terbumeton, Terbuthylazin, Terbutryn, Thiazopyr, Thiobencarb, Tiocarbazil, Triallat, Triclopyr und Trifluralin ausgewählt ist, vermischt wird.

8. Festes Granulat, das im wesentlichen aus
(a) 0,1 bis 100 g/kg an mindestens einer herbiziden Verbindung der Formel IA, 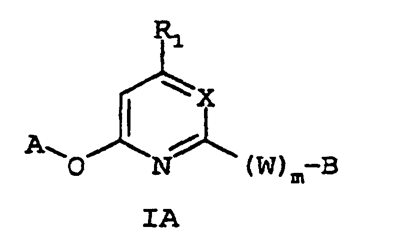 in der A, B, R¹, X, W und m wie in Anspruch 1 definiert sind; und
(b) 900 bis 999,9 g/kg an einem oder mehreren festen Trägern, ausgewählt aus der Reihe bestehend aus granulatförmigem Gips, Tonen, wie Kaolin oder Bentonit, Polyvinylpyrrolidon, Polyvinylacetat, Cyclodextrin, Zucker und Mischungen oder Copolymeren davon, sowie gegebenenfalls mindestens einem festen Hilfsstoff
besteht.

9. Festes Granulat nach Anspruch 8, wobei es sich bei dem festen Träger um ein Cyclodextrin der Formel II, 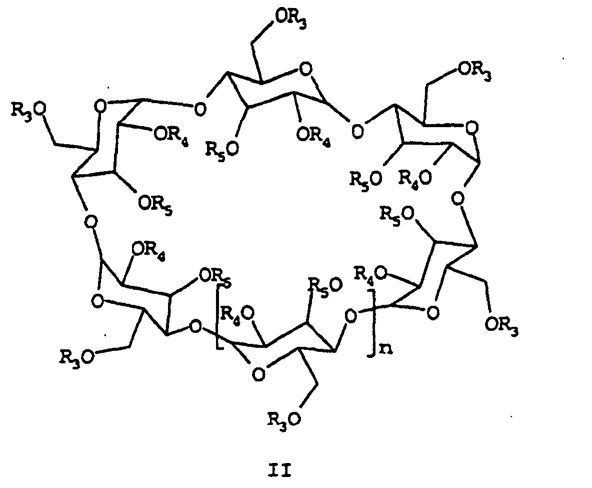 in der
R₃, R₄ und R₅ jeweils unabhängig ein Wasserstoffatom oder eine C₁₋₄-Alkyl, C₁₋₄-Alkanoyl oder eine C₁₋₄-Hydroxyalkylgruppe bedeutet und
n 1, 2 oder 3 bedeutet,
handelt.

10. Festes Granulat nach Anspruch 9, wobei es sich bei dem festen Träger um ein Cyclodextrin der Formel II, in der R₃, R₄ und R₅ jeweils ein Wasserstoffatom und n 2 bedeutet, handelt.

11. Festes Granulat nach Anspruch 8, das
(b1) 50 bis 250 g/kg an einem oder mehreren Cyclodextrinen der Formel II und
(b2) 650 bis 949,9 g/kg an einem oder mehreren festen Trägern, ausgewählt aus der Reihe bestehend aus granulatförmigem Gips, Tonen, wie Kaolin oder Bentonit, Polyvinylpyrrolidon, Polyvinylacetat, Zucker und Mischungen oder Copolymeren davon, sowie gegebenenfalls mindestens einem festen Hilfsstoff
umfaßt.

12. Verfahren für die Bekämpfung von unerwünschten Unkräutern an einem Ort, **dadurch gekennzeichnet, daß** man diesen Ort mit einem festen Granulat, das im wesentlichen aus
(a) 0,1 bis 100 g/kg an mindestens einer herbiziden Verbindung der Formel IA, 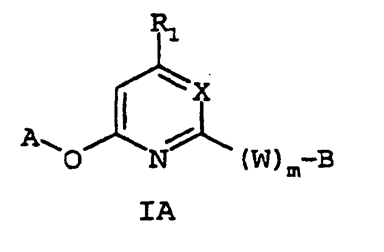 in der A, B, R¹, X, W und m wie in Anspruch 1 definiert sind; und
(b) 900 bis 999,9 g/kg an einem oder mehreren festen Trägern, ausgewählt aus der Reihe bestehend aus granulatförmigem Gips, Tonen, wie Kaolin oder Bentonit, Polyvinylpyrrolidon, Polyvinylacetat, Cyclodextrin, Zucker und Mischungen oder Copolymeren davon, sowie gegebenenfalls mindestens einem festen Hilfsstoff
besteht, behandelt.

13. Verfahren nach Anspruch 12, wobei es sich bei den Unkräutern um *Galium* spp. oder *Alopecurus* spp. handelt.

## Revendications

1. Procédé d'augmentation de l'efficacité d'un composé herbicide de formule IA : 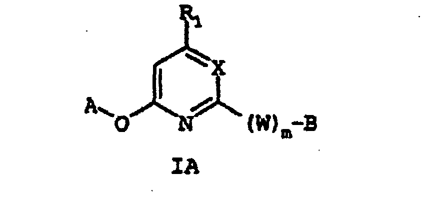 dans laquelle ;
A représente un groupe de formule c : 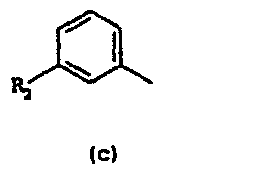 dans laquelle :
R² est un atome d'halogène ou un groupe haloalkyle en C₁₋₃ ou haloalcoxy en C₁₋₃ ;
B représente un cycle phényle, pyridyle, pyrazolyle ou thiényle, étant éventuellement substitué par un ou plusieurs atomes d'halogène, groupes alkyle, haloalkyle ou haloalcoxy ;
R¹ représente un atome d'hydrogène ou d'halogène ou un groupe alkyle ou alcoxy ;
X représente CH ou N ;
W représente -O-, -OCH₂- ou -CONH-, et
m est égal à 0 ou 1,
qui comprend l'application d'une quantité efficace dudit composé herbicide directement au sol sous la forme d'un granule solide qui contient ledit composé herbicide et au moins un support solide inerte.

2. Procédé suivant la revendication 1, dans lequel R² dudit composé herbicide IA est un atome de chlore, ou un groupe trifluorométhyle, pentafluoroéthyle, trifluorométhoxy ou difluorométhoxy.

3. Procédé suivant la revendication 2, dans lequel :
A et B représentent chacun indépendamment un phényle étant éventuellement substitué par un ou plusieurs atomes d'halogène, groupes alkyle, haloalkyle ou haloalcoxy ;
R¹ représente un atome d'hydrogène ou d'halogène ou un groupe alkyle ou alcoxy ;
X représente CH ou N ; et
W représente -CONH-, et
m est égal à 1.

4. Procédé suivant la revendication 3, dans lequel le composé herbicide IA est choisi dans le groupe comprenant le N-(4-fluorophényl)-6-[3-trifluorométhyl)phénoxy]-2-pyridine carboxamide(picolinafen) et la 4-(3-trifluorométhylphénoxy)-2-(4-trifluorométhylphényl)pyrimidine (TTP).

5. Procédé suivant la revendication 1, dans lequel ledit support solide est choisi dans le groupe comprenant des argiles comme le kaolin ou la bentonite, la silice, des sels inorganiques, la polyvinylpyrrolidone, le polyacétate de vinyle, la cyclodextrine, le sucre et leurs mélanges ou copolymères.

6. Procédé suivant la revendication 1, dans lequel le granule solide se compose essentiellement de :
(a) 0,1 à 100 g/kg d'un composé herbicide de formule IA ; et
(b) 900 à 999,9 g/kg d'au moins un support solide inerte, et éventuellement d'au moins un agent auxiliaire solide.

7. Procédé suivant la revendication 1, dans lequel le composé de formule IA est mélangé à un second composé actif qui est choisi dans le groupe comprenant l'acifluorfen, l'aclonifen, l'alachlor, l'alloxydim, l'amétryn, l'amitrole, l'anilazine, l'anilofos, l'asulam, l'atrazine, l'azinphosméthyle, la bénazoline, la benfluraline, le benfurésate, le bensulide, la bentazone, le benzofénap, le bifénox, le bromacil, le brombutide, le bromoxynil, le butachlor, le butamifos, le buténachlor, le butylate, le carfentrazone-éthyle, le chloramben, le chlorbromuron, le chlorbufam, le chlorimuron, le chlornitrofen, le chlorotoluron, le chlorthiamide, la cinméthyline, la clomozone, le clopyralid, la cyanazine, le cyloate, le 2,4-D, le daimuron, le desmétryn, le dicamba, le dichlobénil, le dichloroprop-P, le diclofop-méthyle, le diméfuron, le dimépipérate, le diméthachlor, le diméthatryn, le diméthénamid, la dinitramine, le dinoterb, le dithiopyr, l'esprocarb, l'éthafluraline, l'éthofumésate, l'éthoxyfen-éthyle, le fenoxaprop, le fénuron, le flamprop-M-isopropyle, le flamprop-M-méthyle, le fluazifop, la fluchloraline, le flufénacet, la flumioxazine, le fluométuron, le fluoroglycofen, le flupoxam, la fluridone, la flurochloridone, le flurprimidol, la flurtamone, le fluthiacét-méthyle, le fomesafen, le glufosinate, l'haloxyfop, l'ioxynil, l'isoxaflutole, le lactofen, le linuron, le mécoprop, le mécoprop-P, le méfénacet, le métazachlor, le métobenzuron, le métobromuron, le métolachlor, le métoxuron, le monolinuron, le naproanilide, le napropamide, le naptalam, le norflurazon, l'orbencarb, l'oxadiazon, l'oxyfluorfen, le pebulate, la pendiméthaline, le picloram, le pretilachlor, la prodiamine, le prométon, le prométryn, le propachlor, le propanil, le propisochlor, le propyzamide, le prosulfocarb, le pyrazoxyfen, le pyributicarb, le siduron, le tébuthiuron, le terbacil, le terbuméton, la terbutylazine, le terbutryn, le thiazopyr, le thiobencarb, le thiocarbazil, le triallate, le triclopyr et la trifluraline.

8. Granule solide qui se compose essentiellement de :
(a) 0,1 à 100 g/kg d'au moins un composé herbicide de formule IA : 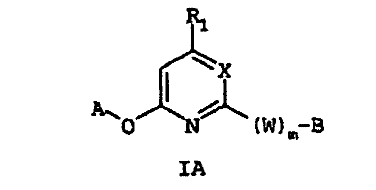 dans laquelle A, B, R¹, X, W et m sont tels que définis dans la revendication 1 ; et
(b) 900 à 999,9 g/kg d'un ou plusieurs supports solides choisis dans le groupe comprenant le gypse granulaire, des argiles comme le kaolin ou la bentonite, la polyvinylpyrrolidone, le polyacétate de vinyle, la cyclodextrine, le sucre et leurs mélanges ou copolymères, et éventuellement d'au moins un agent auxiliaire solide.

9. Granule solide suivant la revendication 8, dans lequel le support solide est une cyclodextrine de formule II : 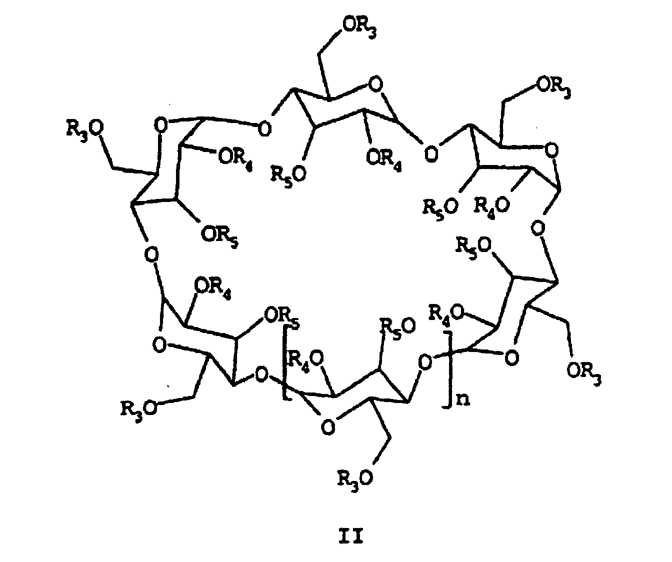 dans laquelle :
R₃, R₄ et R₅ représentent chacun indépendamment un atome d'hydrogène ou un groupe alkyle en C₁₋₄, alcanoyle en C₁₋₄ ou hydroxyalkyle en C₁₋₄, et n est égal à 1, 2 ou 3.

10. Granule solide suivant la revendication 9, dans lequel le support solide est une cyclodextrine de formule II, dans laquelle R₃, R₄ et R₅ représentent chacun un atome d'hydrogène et n est égal à 2.

11. Granule solide suivant la revendication 8, qui comprend :
(b1) 50 à 250 g/kg d'une ou plusieurs cyclodextrines de formule II ; et
(b2) 650 à 949,9 g/kg d'un ou plusieurs supports solides choisis dans le groupe comprenant le gypse granulaire, des argiles comme le kaolin ou la bentonite, la silice, des sels inorganiques, la polyvinylpyrrolidone, le polyacétate de vinyle, le sucre et leurs mélanges ou copolymères, et éventuellement au moins un agent auxiliaire solide.

12. Procédé pour lutter contre les mauvaises herbes indésirables en un lieu, qui comprend le traitement dudit lieu par un granule solide qui se compose essentiellement de :
(a) 0,1 à 100 g/kg d'au moins un composé herbicide de formule IA : 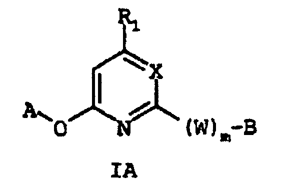 dans laquelle A, B, R¹, X, W et m sont tels que définis dans la revendication 1 ; et
(b) 900 à 999,9 g/kg d'un ou plusieurs supports solides choisis dans le groupe comprenant le gypse granulaire, des argiles comme le kaolin ou la bentonite, la polyvinylpyrrolidone, le polyacétate de vinyle, la cyclodextrine, le sucre et leurs mélanges ou copolymères, et éventuellement d'au moins un agent auxiliaire solide.

13. Procédé suivant la revendication 12, dans lequel lesdites mauvaises herbes sont *Galium spp.* ou *Alopecurus spp.*
